# EUROPEAN PATENT APPLICATION

(11) **EP 1 571 131 A2**
(43) Date of publication of application: **07.09.2005**
(21) Application number: 04025189.4
(22) Date of filing: 22.10.2004
(51) Int. Cl.: C03B 37/016, C03B 37/012

(54) **Method of fabricating a preform for holey optical fibre**

(30) Priority: 03.03.2004 KR 2004014272
(71) Applicant: SAMSUNG ELECTRONICS CO., LTD., Gyeonggi-do (KR)
(72) Inventor: Bang, Jung-Je, Suwon-si Gyeonggi-do (KR); Baik, Young-Min, Suwon-si Gyeonggi-do (KR); Park, Keun-Deok, Suwon-si Gyeonggi-do (KR); Kim, Soon-Jae, Suwon-si Gyeonggi-do (KR); Kim, Byeong-Sam, Suwon-si Gyeonggi-do (KR)
(74) Representative: Lang, Johannes

(57) **Abstract**

A method of fabricating a preform for a holey optical fiber, which prevents gel tubes from cracking includes the steps of: (a) forming sol using a starting material of silica glass; (b) pouring the silica glass in the sol state produced in step (a) into a plurality of molds, and gelating the silica glass to form a plurality of gel tubes, each having one air hole; (c) drying the gel tubes after removing the plurality of gel tubes from the individual molds; (d) applying a heat treatment of the gel tubes dried in step (c) to remove moisture and impurities contained in the gel tubes; (e) stacking the gel tubes, which have been subjected to heat treatment in step (d), in a predetermined array; and (f) sintering the stacked gel tubes, thereby vitrifying the gel tubes.

## Description

### BACKGROUND OF THE INVENTION

### 1. Field of the Invention

The present invention relates to a method of fabricating a preform for a holey optical fiber with a plurality of air holes.

### 2. Description of the Related Art

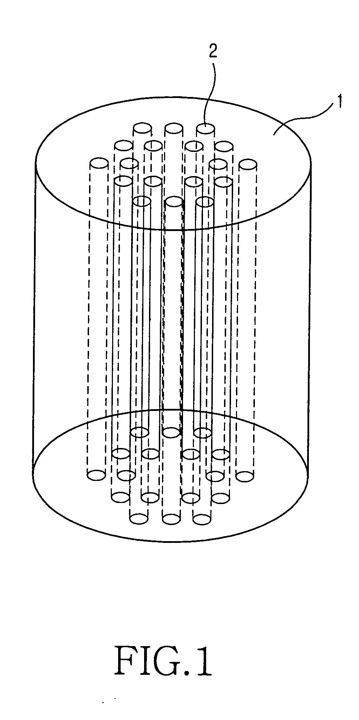

In general, a single-mode optical fiber transmits data using the difference in the refractive index between a core and a cladding thereof, wherein the core is formed by adding germanium or phosphorus to glass. As shown in FIG. 1, a holey optical fiber is formed using a substantially transparent material of a single solid phase, such as quartz glass 1, and it has a plurality of air holes 2 which are regularly arranged along the fiber extending over the entire length in parallel relationship to the axis of the fiber.

The holey optical fiber provides a photonic band gap using the difference in the dielectric constant between the air layer and the quartz glass layer, wherein the photonic band gap provides a photonic stop band to a certain wavelength or a progress direction of a lightwave similar to an electronic band-gap. That is, the photonic band gap allows only light meeting the requirement of the photonic band gap to pass the photonic band gaps. In other words, the progress of light within the holey optical fiber is executed by a photonic band-gap effect and an effective index effect, as disclosed in detail in published papers "Electronic Letters, Vol. 31(22) pp. 1941 (October 1995)," by T. A. Birks *et. al.*, and "Proceeding of OFC, PD 3-1 (February, 1996)," by J. C. Knight *et. al*.

A holey optical fiber has a lot of technically-important characteristics. For example, a holey optical fiber can support a single mode over a wide range of wavelengths and can have a large mode area, thus capable of transmitting high optical power. Further, a holey optical fiber exhibits a large phase-dispersion at a telecommunication wavelength of 1.55 µm. Moreover, a holey optical fiber is used to increase/decrease non-linearity and to adjust polarization. As characteristics of a photonic crystal optical fiber having various functionalities as described herein are successively reported, it is expected that holey optical fibers will be widely applied to optical communication and optical industry in the near future.

Meanwhile, conventional methods of fabricating a preform for a holey optical fiber include a glass stacking method, a glass drilling method, and a sol-gel molding method.

The glass stacking method is a fabricating process which includes repeating the steps of: stacking, bundling, and elongating a plurality of glass tubes with high purity. However, the glass stacking method has a problem in that glass is difficult to process, and glass tubes are manually assembled. As such, contamination may be caused during the assembling of glass tubes, thereby requiring repeated cleansing operations. As a result, the glass stacking method has a disadvantage in that production costs are high and processing time is very long.

The glass drilling method involves fabricating a preform by drilling glass to form air holes. However, the glass drilling method has a disadvantage in that the inner surfaces of the air holes are difficult to clean and the cleaning process costs are very high as the process requires hard glass.

The sol-gel method involves fabricating a preform comprising the steps of: arranging a plurality of rods for forming a plurality of longitudinal air holes within a cylindrical mold; pouring raw material of liquid state into the mold and gelating the raw material; removing the plurality of rods from the raw material of the gel state; and then sintering the raw material. The sol-gel method has an advantage in that the entire process is very simple and convenient and manufacturing costs are considerably low. However, the conventional sol-gel method has a problem in that an undesirable impact may be applied to the gel while the air-hole forming rods are removed from the gel after the gel is formed, and is also very susceptible to crack due to the impact. In addition, the sol-gel method has a problem in that the preform has a large volume and the efficiency of heat treatment is deteriorated because the air holes are spaced from each other.

### SUMMARY OF THE INVENTION

Accordingly, the present invention has been made to solve the above-mentioned problems occurring in the prior art and provides additional advantages, by providing a method of fabricating a preform for a holey optical fiber that can prevent gel from cracking during the process of drying or heat treatment of the preform in the sol-gel method.

According to the present invention, there is provided a method of fabricating a preform for a holey optical fiber comprising the steps of: (a) forming sol using a starting material of silica glass; (b) pouring the silica glass in the sol state produced in step (a) into a plurality of molds, and gelating the silica glass to form a plurality of gel tubes, each having one air hole; (c) drying the gel tubes after removing the plurality of gel tubes from the individual molds; (d) heat-treatment of the gel tubes dried in step (c) to remove moisture and impurities contained in the gel tubes; (e) stacking the heat-treated gel tubes that have been subject to heat treatment in step (d), in a predetermined array; and, (f) sintering the stacked gel tubes, thereby vitrifying the gel tubes.

Preferably, fumed silica is used as the starting material of silica glass, and step (a) is implemented by dispersion and aging of the fumed silica.

Alternatively, silicon alkoxide may be used as the starting material of silica glass, and step (a) is implemented by hydrolysis of the silicon alkoxide.

### BRIEF DESCRIPTION OF THE DRAWINGS

The above features and advantages of the present invention will be more apparent from the following detailed description taken in conjunction with the accompanying drawings, in which:
- FIG. 1: illustrates a construction of a conventional preform for a holey optical fiber; and,
- FIG. 2: is a flowchart illustrating the process of fabricating a preform for a holey optical fiber according to an embodiment of the present invention.

### DETAILED DESCRIPTION

Hereinafter, embodiments of the present invention will be described with reference to the accompanying drawings. For the purposes of clarity and simplicity, a detailed description of known functions and configurations incorporated herein will be omitted as it may make the subject matter of the present invention unclear.

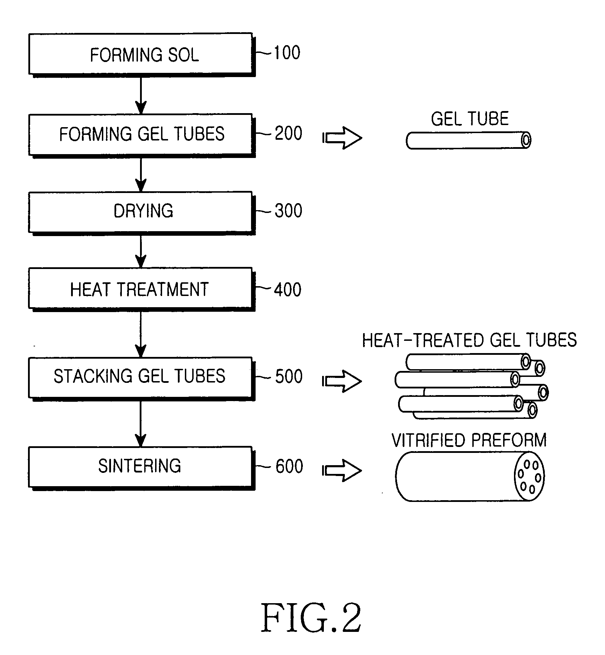

FIG. 2 is a flowchart illustrating the process of fabricating a preform for a holey optical fiber according to an embodiment of the present invention. As shown, the method according to the present invention includes: sol forming step 110, gel tube forming step 200, drying step 300; heat treatment step 400; gel tube stacking step 500; and sintering step 600.

In the sol forming step 100, silicon alkoxide or fumed silica, which is a starting material of silica glass, is formed into a sol state. When the sol is formed using silicon alkoxide as the starting material of silica glass, the sol forming step is implemented in such a manner that a solvent such as water and alcohol is added to silicon alkoxide, thereby producing hydrolysis. Alternatively, when the sol is formed using fumed silica as the starting material of silica glass, the sol-forming step is implemented in such a manner that a dispersion agent or plasticizer is added to fumed silica, and the fumed silica is dispersed in deionized water and then left as it is for a predetermined length of time, thereby being aged to form the sol.

In the gel tube forming step 200, a plurality of gel tubes are formed by pouring the sol produced in the sol forming step 100 into individual molds and gelating the sol. In a conventional sol-gel process, a gel tube is formed with a plurality of air holes. However, according to the present invention, a plurality of gel tubes is formed and each gel tube comprises one air hole; the number of gel tubes corresponds to that of air holes to be formed in a preform for a holey optical fiber. As only one air hole is formed in each gel tube, it is possible to keep the cracks generated in the gel tubes to a minimum during the drying and heat treatment steps to be performed subsequently. In addition, it is possible to add a gelating agent or to increase the ambient temperature within 80°C in order to shorten the gelating step. As the gelating agent, formamide, ammonium fluoride, ethyl lactate, methyl lactate, etc., may be used.

In the drying step 300, the gel tubes, which have been completely gelated, are removed from the respective molds and dried within a constant temperature and humidity chamber.

In the heat treatment step 400, the gel tubes which have been dried in the drying step are subject to a heat treatment so that moisture and impurities contained in the gel tubes are removed. The heat treatment step 400 is implemented in two sub-steps; at first, moisture, dispersion agent, plasticizer, etc., remaining in the gel are removed through heat treatment within an oven, and then moisture, OH, organic matter, metallic impurities, etc., are decomposed and removed through low-temperature heat treatment.

In the gel tube stacking step 500, the gel tubes, which have been subject to heat treatment, are arranged so that a desired array of air holes are obtained. Here, it is possible to tune the optical transmission property of a holey optical fiber formed from the preform prepared as described above on the basis of the size of air holes, the array of gel tubes, or the spacing of air holes. In the present embodiment, although it is disclosed that the gel tubes are stacked after heat treatment, it is also possible to perform the heat treatment after drying and stacking the gel tubes.

In the sintering step 600, the stacked gel tubes are sintered and thereby vitrified during which the gel tubes are heated to about 1350°C to 1600°C, thereby finishing the preform for a holey optical fiber. As the gel tubes are somewhat strengthened after being subject to the heat treatment, the possibility for cracks to be produced in the gel tubes is lowered. It is also possible to put a cap on or to drill each of the gel tubes so as to bundle and sinter the individual gel tubes at the time of sintering. In addition, by concurrently sintering the respective gel tubes at once, the efficiency of heat treatment can be enhanced.

According to the first embodiment of the sintering step 600, a vacuum vertical furnace is used as a sintering furnace, and gel tubes, which have been subjected to a heat treatment, are allowed to be suspended in a circular-sectioned bundle form by putting a SiC cap on the gel tubes. In addition, a mechanism for bearing the loads of gel tubes are introduced into the vertical furnace so that the gel tubes do not fall off from the SiC caps. In order to prevent the gel tubes from being contaminated and/or falling off from the SiC caps, the gel tubes are sintered except some parts at the top and lower ends of the gel tubes.

According to a second embodiment of the sintering step 600, an opening is formed in each gel tube, which has been subjected to heat treatment, and then the gel tubes are allowed to be suspended in a circular-sectioned bundle form by inserting SiC pins into the gel tubes. The gel tubes are sintered downwardly from the upper ends thereof.

As explained in the foregoing, a plurality of gel tubes is formed, each of which has one air hole, dried, stacked to form a predetermined array of air holes, and then is sintered. Therefore, it is possible to keep cracks generated in the gel tubes to a minimum in the process of drying and heat treatment of individual gel tubes.

While the invention has been shown and described with reference to certain embodiments thereof, it will be understood by those skilled in the art that various changes in form and details may be made therein without departing from the spirit and scope of the invention as defined by the appended claims.

## Claims

1. A method of fabricating a preform for a holey optical fiber comprising steps of:
(a) forming sol using a starting material of silica glass;
(b) pouring the silica glass in the sol state produced in step (a) into a plurality of molds, and gelating the silica glass to form a plurality of gel tubes, each having one air hole;
(c) drying the gel tubes after removing the plurality of gel tubes from the individual molds;
(d) applying a heat treatment to the gel tubes dried in step (c) to remove moisture and impurities contained in the gel tubes;
(e) stacking the gel tubes, which have been subjected to heat treatment in step (d), in a predetermined array; and,
(f) sintering the stacked gel tubes, thereby vitrifying the gel tubes.

2. The method as claimed in claim 1, wherein fumed silica is used as the starting material of silica glass, and step (a) is implemented by dispersion and aging of the fumed silica.

3. The method as claimed in claim 2, wherein the fumed silica is dispersed in deionized water and left for a predetermined time period to form the sol.

4. The method as claimed in claim 1, wherein silicon alkoxide is used as the starting material of silica glass, and step (a) is implemented by hydrolysis of the silicon alkoxide.

5. The method as claimed in claim 4, wherein step (a) further comprises the step of adding water and alcohol to the silicon alkoxide.

6. The method as claimed in claim 1, wherein in step (d), a SiC cap is put on the individual gel tubes, which have been completely subjected to a heat treatment, in a circular-sectioned bundle form and then suspending and sintering the gel tubes in a vertical sintering furnace.

7. The method as claimed in claim 4, wherein the gel tubes are sintered except some parts of top and lower ends thereof so as to prevent the gel tubes from falling off from the SiC cap and being contaminated.

8. The method as claimed in claim 1, wherein in step (d), an opening is formed in each gel tube which has been completely subjected to heat treatment, a SiC pin is inserted into the hole, and then the gel tubes are suspended in a circular-sectioned bundle form and sintered in a vertical sintering furnace.

9. The method as claimed in claim 1. wherein the step (b) of geletating the silica glass is achieved using one of formamide, ammonium fluoride, ethyl lactate, and methyl lactate as a geletating agent.

10. The method as claimed in claim 1, wherein the step (c) of drying the gel tubes is performed at a constant temperature and in a humidity chamber.

11. The method as claimed in claim 1, wherein the step (f) of sintering the stacked gel tubes is performed under a temperature between 1350°C to 1600°C.
